# EUROPÄISCHE PATENTSCHRIFT

(11) **EP 3 671 962 B1**
(45) Veröffentlichungstag und Bekanntmachung des Hinweises auf die Patenterteilung: **03.11.2021**
(21) Anmeldenummer: 18306706.5
(22) Anmeldetag: 17.12.2018
(51) Int. Cl.: H01R 9/05, H01R 9/03, H02G 15/105, H01R 4/20, H02G 15/113, H02G 15/115

(54) **LEITUNGSVERBINDER FÜR ELEKTRISCHE LEITUNGEN UND ENTSPRECHENDES VERFAHREN**
CONNECTING DEVICE FOR ELECTRICAL LINES AND CORRESPONDING METHOD
RACCORD DE LIGNE POUR LIGNES ÉLECTRIQUES ET MÉTHODE CORRESPONDANTE

(43) Veröffentlichungstag der Anmeldung: 24.06.2020
(73) Patentinhaber: Nexans, 92400 Courbevoie (FR)
(72) Erfinder: HUSCHER, Rainer, 92685 FLOSS (DE); HOCH, Marina, 92685 FLOSS (DE)
(74) Vertreter: Ipsilon

(56) Entgegenhaltungen:
- WO-A1-2014/070851
- GB-A- 2 164 805
- US-A1- 2013 043 069
- US-B1- 6 227 881

## Beschreibung

### Gebiet

Die Erfindung betrifft eine Anordnung zur Verbindung elektrischer Leitungen, insbesondere geschirmter elektrischer Leitungen, sowie ein entsprechendes Verfahren.

### Hintergrund

Elektrische Signal- und Energieleitungen, die hochfrequente Signale bzw. Energie mit hochfrequenten Anteilen führen, werden in der Regel als geschirmte Leitungen ausgeführt, um die unkontrollierte Ausbreitung der hochfrequenten Signalanteile zu verringern oder zu verhindern. Geschirmte Leitungen finden auch Anwendung bei Leitungen, die Signale mit niedrigem Pegel oder niedriger Energie führen, und deren Signale vor Störungen von anderen Leitungen abgeschirmt werden müssen.

Insbesondere bei der Steuerung elektrischer Antriebe mit hochfrequent geschalteten Spannungen und Strömen hoher Energie, wie sie zum Beispiel in Hybrid- und Elektrofahrzeugen vorkommen, ist es nötig die ungehinderte Ausbreitung von Störsignalen zu verringern oder zu verhindern. Die modulare Bauweise der Komponenten von Hybrid- und Elektrofahrzeugen sowie die bei Fahrzeugen generell eingeschränkten räumlichen Verhältnisse, die eine durchgängige Verlegung von Leitungen erschweren, erfordern dabei häufig die Verbindung von Leitungssegmenten.

Der Anschluss bzw. die Verbindung von geschirmten Leitungen ist um einiges aufwendiger als bei ungeschirmten Leitungen. Dies liegt vor allem daran, dass geschirmte Leitungen häufig als Koaxialleitungen ausgeführt sind und dass der elektrische Anschluss des Schirms an ein Gehäuse, beispielsweise eines Steckers oder eine Buchse, oder an einen Schirm einer anderen Leitung deutlich mehr Arbeitsschritte erfordert als der simple Anschluss eines Leiters.

Die Anwendung von Crimpverbindungen ist in vielen Industriebranchen verbreitet, weil sie eine sichere elektrische Kontaktierung mit reproduzierbaren Eigenschaften ermöglichen. Nachteilig insbesondere bei geschirmten Leitungen ist dagegen der Arbeitsaufwand. Gerade bei der Verbindung von geschirmten Koaxialleitungen mit Crimpverbindungen ist eine Automatisierung nicht oder nur sehr eingeschränkt möglich.

Bei einer bekannten Lösung werden die einzelnen Leitungen nebeneinander oder einander gegenüberliegend angeordnet und deren Schirme einzeln bzw. in Gruppen mit einem Schirmblech eines Leitungsverbinders elektrisch leitend verbunden. Dazu wird zuerst die äußere Isolierung am zu verbindenden Ende der geschirmten Leitung entfernt und ggf. ein Teil des Schirms entfernt. Außerdem kann die Länge des Schirms gekürzt werden, so dass an dem zu verbindenden Ende der Leitung nur noch der Leiter sowie dessen Isolierung verbleibt, die üblicherweise an der Verbindungsstelle zweier oder mehrerer Leiter entfernt wird. Der Schirm der Leitung wird über eine innere Hülse geschoben, die bei einer Crimpverbindung auch als Untercrimphülse bezeichnet wird. Die innere Hülse kann Teil des Schirmblechs des Leitungsverbinders sein, das Schirmblech kann aber auch mit einer Lasche oder mit einem Steg mit der inneren Hülse verbunden werden. Der Leiter sowie dessen Isolierung liegen innerhalb der inneren Hülse bzw. sind durch diese hindurchgeführt. Der über der inneren Hülse liegende Schirm und gegebenenfalls das Schirmblech können nun mit der Außenseite der inneren Hülse elektrisch leitend verbunden werden, zum Beispiel durch Löten oder Schweißen. Im Falle einer Crimpverbindung wird eine Crimphülse über den über der inneren Hülse liegenden Schirm und gegebenenfalls über die Lasche oder den Steg des Schirmblechs geschoben und die Anordnung durch Aufbringen einer äußeren Kraft miteinander verbunden.

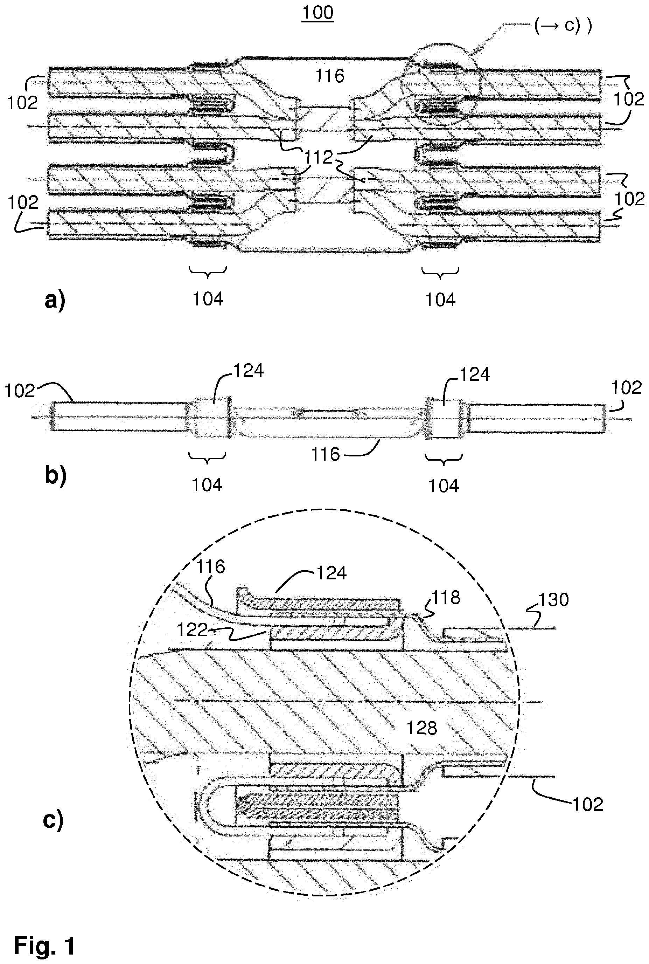

Eine beispielhafte Ausführung der bekannten Lösung ist in Figur 1 gezeigt. Figur 1 a) zeigt eine Draufsicht auf einen Leitungsverbinder 100 bekannter Bauart zur Verbindung von bis zu acht geschirmten Leitungen 102. Leitungsverbinder 100 umfasst eine elektrisch leitende Umhüllung 116, die in der in der Figur 1 a) dargestellten bekannten Lösung zweiteilig ausgeführt ist. In der Figur 1 a) ist nur die untere Hälfte der elektrisch leitenden Umhüllung 116 gezeigt. Jeweils vier geschirmte Leitungen 102 sind an der rechten bzw. der linken Seite des Leitungsverbinders 100 an diesen heran bzw. herein geführt. Die Leiter der geschirmten Leitungen 102 sind zwischen den Anschlussbereichen 104 des Leitungsverbinders 100 miteinander verbunden. In dem in der Figur 1 a) gezeigten Beispiel sind jeweils die Leiter 112 der beiden oberen bzw. unteren gegenüberliegenden Leitungspaare miteinander verbunden. Die Schirme der Leitungen 102 sind im Anschlussbereich über in schalenförmige Bereiche der unteren Hälfte der elektrisch leitenden Umhüllung 116 eingelegte Untercrimphülsen geschoben. Über jede der Leitungen und Untercrimphülsen ist eine Crimphülse geschoben.

Figur 1 b) zeigt eine Seitenansicht des Leitungsverbinders 100 bekannter Bauart, aus der die Lage der Crimphülsen 124 in Bezug auf die untere Hälfte der elektrisch leitenden Umhüllung 116 deutlicher erkennbar ist. Die Untercrimphülsen sind in dieser Ansicht von den Crimphülsen 124 verdeckt.

Figur 1 c) zeigt eine Detailansicht der Crimpverbindung für eine Leitung. Der von einer inneren Isolierung 128 umhüllte Leiter der elektrischen Leitung 102 ist durch die Untercrimphülse 122 geschoben, und der Schirm 118 liegt außerhalb der Untercrimphülse. In dieser exemplarischen Darstellung ist der Schirm sogar über den schalenförmigen Bereich der unteren Hälfte der elektrisch leitenden Umhüllung 116 geschoben. Über die gesamte Anordnung von Untercrimphülse 122, schalenförmigen Bereich und Schirm 118 ist die Crimphülse 124 geschoben. Die äußere Isolierung 130 der Leitung ist in diesem Beispiel nicht von der Crimpverbindung umfasst.

WO 2014/070851 A1 offenbart einen Leitungsverbinder für elektrische Leitungen mit an Anschlussbereichen des Leitungsverbinders angeordneten Halteelementen, über welche die elektrischen Leitungen in den Leitungsverbinder hineinführbar sind, wobei die Leiter der in den Leitungsverbinder hineingeführten Leitungen in einem zwischen den Anschlussbereichen liegenden Verbindungsbereich elektrisch verbindbar sind, mit einer ersten elektrisch leitenden Umhüllung, die die Halteelemente und den dazwischen liegenden Verbindungsbereich umhüllt, und mit einem oder mehreren Klemmelementen, welche auf die erste elektrisch leitende Umhüllung zumindest im Bereich der Halteelemente eine Kraft ausüben.

Es ist klar erkennbar, dass bei der bekannten Lösung jede in den Leitungsverbinder hineinführende Leitung zunächst mit einer Untercrimphülse versehen werden und separat mit dem Schirmblech verbunden werden muss. Wenn, wie in dem Beispiel, acht Leitungen verbunden werden sollen bedeutet das acht einzelne Vorbereitungs- und Crimpvorgänge, welche zu der eigentlichen Verbindung der Leiter hinzukommen.

Hiervon ausgehend hat die vorliegende Erfindung die Aufgabe, einen Leitungsverbinder sowie ein Verfahren zur Verbindung von Leitungen anzugeben, die eines oder mehrere der eingangs genannten Probleme überwinden oder zumindest verkleinern.

### Zusammenfassung der Erfindung

Zur Lösung dieser Aufgabe schlägt die Erfindung nach einem ersten Aspekt einen Leitungsverbinder für elektrische Leitungen vor, der an Anschlussbereichen angeordnete Halteelemente aufweist, über welche die elektrischen Leitungen in den Leitungsverbinder hereinführbar sind. Jedes der vorzugsweise zumindest in radialer Richtung formstabil ausgeführten Halteelemente weist an einem umlaufenden Rand eine oder mehrere als Vertiefungen ausgestaltete Aufnahmen für Leitungen auf. Die Leiter der in den Leitungsverbinder hineingeführten Leitungen können in einem zwischen den Anschlussbereichen liegenden Verbindungsbereich elektrisch verbindbar sein. Der Leitungsverbinder weist außerdem eine erste elektrisch leitende Umhüllung auf, welche die Halteelemente und den dazwischen liegenden Verbindungsbereich umhüllt. Die erste elektrisch leitende Umhüllung steht zumindest im Bereich der Halteelemente mit einem frei liegenden elektrisch leitenden Element der elektrischen Leitungen in elektrisch leitendem Kontakt. Der Leitungsverbinder weist darüber hinaus ein oder mehrere Klemmelemente auf, welche auf die erste elektrisch leitende Umhüllung zumindest im Bereich der Halteelemente eine Kraft ausüben, die die erste elektrisch leitende Umhüllung gegen die frei liegenden elektrisch leitenden Elemente der in den Halteelementen aufgenommenen elektrischen Leitungen drückt.

Bei einer Ausführungsform des Leitungsverbinders sind die Halteelemente an gegenüberliegenden Stirnseiten des Leitungsverbinders angeordnet. Es ist jedoch auch möglich, drei oder mehr Halteelemente zum Beispiel stern-, T- oder kreuzförmig um einen Verbindungsbereich herum anzuordnen. Grundsätzlich ist jede Position, an der ein Halteelement angeordnet ist ein Anschlussbereich, und an jedem Anschlussbereich können Klemmelemente vorgesehen sein.

Bei einer Ausführungsform des Leitungsverbinders sind die Halteelemente scheibenförmig, und die Aufnahmen für Leitungen befinden sich am Rand der scheibenförmigen Halteelemente. Je nach geometrischer Form der Halteelemente, zum Beispiel rund oder rechteckig, können die Aufnahmen für Leitungen jeweils an zwei gegenüberliegenden Seiten oder gleichmäßig verteilt entlang des gesamten Umfangs der Halteelemente angeordnet sein.

Bei einer Ausführungsform des Leitungsverbinders weisen die Vertiefungen der Aufnahmen für Leitungen gegenüber der äußeren Oberfläche des Halteelements eine Tiefe auf, welche nicht größer ist als ein äußerer Durchmesser eines elektrischen Leiters oder eines elektrischen Schirms einer in der Aufnahme positionierten Leitung. Bei einer alternativen Ausführungsform weist die erste elektrisch leitende Umhüllung im Bereich der Aufnahmen für Leitungen entsprechende Vorsprünge auf, die in die Vertiefungen eingreifen und so den elektrischen Kontakt zu den elektrisch leitenden Elementen der in den Halteelementen aufgenommenen elektrischen Leitungen herstellt. Die Vorsprünge können beispielsweise in die Vertiefungen eingreifende Stifte oder Federzungen umfassen. Die alternative Ausführungsform kann vorteilhaft sein, wenn ein äußerer Durchmesser der in einer Aufnahme aufgenommenen elektrischen Leitung kleiner ist als eine Tiefe der die Aufnahme bildenden Vertiefung.

Bei einer Ausführungsform des Leitungsverbinders sind die Vertiefungen der Aufnahmen für Leitungen so geformt, dass eine eingelegte Leitung eingeklemmt wird. So kann beispielsweise die Öffnung, durch die die Leitung in die Vertiefung eingelegt wird, eine geringere Breite aufweisen als der Innenraum der Aufnahme.

Bei einer Ausführungsform sind die Vertiefungen der Aufnahmen für Leitungen so gestaltet, dass jeweils zwei oder mehr Leitungen aufgenommen werden können. Die Aufnahmen können dabei zur Aufnahme mehrerer Leitungen nebeneinander ausgestaltet sein, es ist aber auch möglich, die Aufnahmen so auszugestalten, dass mehrere Leitungen übereinander in einer Aufnahme aufgenommen werden können. Die Außenseiten der mehreren in einer Aufnahme aufgenommenen Leitungen können sich dabei an einer oder mehreren Stellen berühren. Zweckmäßigerweise ist die Tiefe der Vertiefung der Aufnahme für Leitungen bei übereinander liegenden Leitungen so gewählt, dass die Außenseite der außen bzw. oben liegenden Leitung mit der ersten elektrisch leitenden Umhüllung in Kontakt kommen kann.

Bei einer Ausführungsform des Leitungsverbinders sind mehrere Halteelemente mechanisch miteinander verbunden. Die mechanische Verbindung kann beispielsweise einen Steg zwischen zwei oder mehreren Halteelementen umfassen.

Bei einer Ausführungsform des Leitungsverbinders bestehen die Halteelemente aus einem elektrisch leitenden Material, zum Beispiel aus Metall, einem leitfähigen Kunststoff, einem mit leitfähigen Partikeln versetzten Kunststoff oder einem mit Metallfasern verstärkten Kunststoff. Durch die elektrisch leitende Verbindung der Halteelemente mit der ersten elektrisch leitenden Umhüllung entsteht eine bis auf die Aufnahmen für Leitungen auch stirnseitig geschlossene elektrisch leitende Hülle.

Die erste elektrisch leitende Umhüllung kann bei einer Ausführungsform des Leitungsverbinders bündig mit Außenseiten der Halteelemente abschließen, so dass der gesamte Leitungsverbinder von der ersten elektrisch leitenden Umhüllung umschlossen ist.

Bei einer Ausführungsform des Leitungsverbinders weisen die Halteelemente ein oder mehrere entlang des Umfangs der Halteelemente angeordnete Vorsprünge auf, welche in entsprechende Aussparungen in der ersten elektrisch leitenden Umhüllung eingreifen. Hierdurch kann insbesondere bei nicht starr miteinander verbundenen Halteelementen die Montage des Leitungsverbinders vereinfacht werden, und es können auf einfache Weise Leitungsverbinder mit vorbestimmten Abmessungen hergestellt werden. Alternativ können die Halteelemente zwischen den Aufnahmen Vertiefungen aufweisen, bspw. Schlitze oder Kerben, in welche entsprechende Vorsprünge der ersten elektrisch leitenden Umhüllung eingreifen. Bei scheibenförmigen Halteelementen ist es auch möglich, diese zwischen jeweils zwei entsprechend beabstandeten Vorsprüngen der ersten elektrisch leitenden Umhüllung einzuklemmen. Jeder der vorstehend beschriebenen Alternativen ermöglicht es, die Position der Halteelemente in Bezug auf die erste elektrisch leitende Umhüllung festzulegen bevor die Klemmelemente die erste elektrisch leitende Umhüllung und die Halteelemente fixieren.

Bei einer Ausführungsform des Leitungsverbinders ist die erste elektrisch leitende Umhüllung mehrteilig ausgeführt. Die einzelnen Teile stehen miteinander in elektrischem Kontakt. Angrenzende Kanten der ersten elektrisch leitenden Umhüllung können dazu stumpf aneinanderstoßen, überlappend ausgeführt sein oder kammartig ineinandergreifen. Bei letzterer Variante können die Fingerseiten sich berühren und gegebenenfalls nur kleine Lücken an den Spitzen der Zinken der Kämme verbleiben. Der elektrische Kontakt der einzelnen Teile kann auch durch die Klemmelemente hergestellt sein, welche hierzu selbst elektrisch leitend ausgeführt sein müssen. Durch die vorstehend beschriebenen Varianten kann eine elektrisch weitgehend geschlossene Umhüllung bei gleichzeitig vereinfachter Montage sichergestellt werden.

Bei einer Ausführungsform des Leitungsverbinders weist die erste elektrisch leitende Umhüllung an den Anschlussbereichen in Richtung der Leiter zeigende, mit den Aufnahmen korrespondierende Vorsprünge auf, zum Beispiel stift- oder zahnartige Vorsprünge, die eine äußere Isolierung einer in einer Aufnahme positionierten Leitung durchdringen und einen elektrischen Kontakt mit einem darunterliegenden Schirm oder Leiter herstellen. Bei dieser Ausführungsform kann unter Umständen das Entfernen der Isolierung entfallen. Außerdem werden die Leitungen gegen axiale Verschiebung in Bezug auf den Leitungsverbinder gesichert. Es ist jedoch darauf zu achten, bspw. durch geeignete Dimensionierung der Aufnahmen der Halteelemente, der Leiterabmessungen und/oder der Länge der Vorsprünge der ersten elektrisch leitenden Umhüllung, dass bei einer geschirmten Leitung, deren Schirm auf diese Weise kontaktiert werden soll, die Vorsprünge nicht zu weit durch den Schirm in die Leitung eindringen, damit kein Kurzschluss zwischen Schirm und Leiter entsteht.

Bei einer Ausführungsform des Leitungsverbinders umfassen die Klemmelemente eine durch äußere Krafteinwirkung plastisch verformbare zweite Umhüllung. Die plastische Verformung kann beispielsweise durch Crimpen herbeigeführt werden. Die zweite Umhüllung umhüllt die erste elektrisch leitende Umhüllung zumindest an den Anschlussbereichen und übt nach einer entsprechenden plastischen Verformung zumindest im Bereich der Halteelemente eine Kraft aus, die die erste elektrisch leitende Umhüllung gegen die in den Halteelementen aufgenommenen elektrischen Leitungen drückt. Die zweite Umhüllung kann beispielsweise durch Crimphülsen gebildet sein, welche die erste elektrisch leitende Umhüllung des Leitungsverbinders im Bereich der Halteelemente umschließen. Die zweite Umhüllung kann den Leitungsverbinder jedoch auch zwischen den Anschlussbereichen vollständig umschließen.

Bei einer Ausführungsform des Leitungsverbinders umfassen die Klemmelemente feder- oder gummielastische Elemente, welche die erste elektrisch leitende Umhüllung an oder zwischen den Anschlussbereichen umgreifen oder umschließen. Der Begriff "umschließen" kann so verstanden werden, dass das feder- oder gummielastische Element radial geschlossen um den Leitungsverbinder liegt. Alternativ kann das feder- oder gummielastische Element spiralförmig um den Leitungsverbinder liegen wobei die Spirale mindestens eine volle 360°-Drehung vollführt hat. Die Enden der Spirale können also stumpf aufeinanderstoßen oder aneinander vorbei gehen. Der Begriff "umgreifen" kann dementsprechend so verstanden werden, dass das feder- oder gummielastische Element den Leitungsverbinder nicht vollständig umschließt. Das feder- oder gummielastische Element kann also beispielsweise durch eine Klammer gebildet sein, welche zwei im Wesentlichen gegeneinander wirkende Klemmkräfte erzeugt.

Die Klemmelemente, also die plastisch verformbare zweite Umhüllung bzw. die feder- oder gummielastischen Elemente können bei einer Ausführungsform des Leitungsverbinders aus einem elektrisch leitenden Material bestehen.

Bei einer Ausführungsform des Leitungsverbinders verbinden die Klemmelemente, also die plastisch verformbare zweite Umhüllung bzw. die feder- oder gummielastischen Elemente die Halteelemente, die darin aufgenommenen elektrischen Leitungen und die erste elektrisch leitende Umhüllung kraftschlüssig.

Bei einer Ausführungsform ist der Leitungsverbinder von einer elektrisch isolierenden Schicht umgeben.

Bei einer Ausführungsform des Leitungsverbinders sind gummielastische Dichtelemente vorgesehen, durch welche die Leitungen nach Art einer Übermaßpassung hindurchgeführt sind, und die einen umlaufenden Kragen aufweisen, der zwischen der ersten elektrisch leitenden Umhüllung und einem Klemmelement angeordnet und fixiert ist. Das Dichtelement kann beispielsweise eine Gummi- oder Silikonscheibe mit einem Kragen umfassen, deren Abmessungen im Wesentlichen den Abmessungen und der Form bzw. dem Umriss des entsprechenden Halteelements folgen. Die Durchführung der Leitungen kann durch entsprechende Durchlassöffnungen in dem Dichtelement erfolgen. Für eine größere Flexibilität in der Anwendung können die Durchlassöffnungen geschlossen, aber zur Durchführung von Leitungen vorbereitet sein, zum Beispiel durch Bereiche verringerte Dicke oder vorgekerbte Schlitze. Die Dichtung zwischen Dichtelement und Leitung wird durch die elastischen Eigenschaften des Dichtelements bewirkt.

Bei einer Ausführungsform des Leitungsverbinders ist ein innerhalb der ersten elektrisch leitenden Umhüllung liegender Raum mit einem elektrisch nichtleitenden Fluid gefüllt. Das Fluid kann seine anfängliche Viskosität behalten oder elastisch oder starr aushärtend sein. Das Fluid kann durch eine Öffnung in den Leitungsverbinder eingebracht werden, nachdem alle Leitungen und alle Komponenten des Leitungsverbinders anforderungsgemäß miteinander verbunden sind. Eine Öffnung zum Einbringen des Fluids kann beispielsweise in einem oder mehreren der Halteelemente vorgesehen sein.

Es ist unschwer erkennbar, dass mehrere der vorstehend vorgestellten, sich nicht offensichtlich gegenseitig ausschließenden Ausführungsformen bzw. Merkmale des Leitungsverbinders kombiniert werden können.

Der erfindungsgemäße Leitungsverbinder kann zur Verbindung ungeschirmter Leitungen ebenso verwendet werden wie zur Verbindung geschirmter Leitungen. Bei ungeschirmten Leitungen kann ggf. auf eine zusätzliche Verbindung der Leiter zwischen den Anschlussbereichen verzichtet werden. Bei geschirmten Leitungen können auf einfache Weise die Schirme mehrerer Leitungen miteinander verbunden und ein durchgängiger elektrischer Schirm hergestellt werden. Die Leiter der geschirmten Leitungen können zwischen den Anschlussbereichen innerhalb der durch den Leitungsverbinder gebildeten Abschirmung verbunden werden, beispielsweise durch Schweißen, Löten, Klemmen, Crimpen etc. Außerdem ist es möglich, über den Leitungsverbinder die Schirme der Leitungen mit einem Bezugspotenzial zu verbinden, zum Beispiel Erde oder Masse.

Sofern nicht in allen Aufnahmen eines Halteelements Leitungen aufgenommen sind kann eine nicht mit einer Leitung "belegte" Aufnahme frei bleiben oder mit einem Füllelement belegt sein. Das Füllelement kann leitend oder nichtleitend ausgeführt sein und kann eine Form haben, welche zumindest nach dem Anbringen der Klemmelemente die nicht mit einer Leitung "belegte" Aufnahme ausfüllt und/oder abdichtet.

Gemäß einem erfindungsgemäßen Verfahren zum Verbinden elektrischer Leitungen mit einem erfindungsgemäßen Leitungsverbinder werden zunächst zwei oder mehr zu verbindende elektrische Leitungen in Aufnahmen der Halteelemente positioniert, beispielsweise von außen die Vertiefungen eingelegt. Wenn die Kontaktierung des elektrischen Schirms bzw. des elektrischen Leiters der Leitungen nicht mittels durch eine Isolierung der Leitung dringende Vorsprünge der ersten elektrisch leitenden Umhüllung erfolgt, ist die Isolierung im Bereich der Aufnahmen zweckmäßigerweise zuvor entfernt worden, um das elektrisch leitende Element der Leitung freizulegen, welches mit der ersten elektrisch leitenden Umhüllung in Kontakt gebracht werden soll. Wenn Schirme der Leitungen mit der ersten elektrisch leitenden Umhüllung verbunden werden sollen können die elektrischen Leiter der zu verbindenden elektrischen Leitungen nunmehr miteinander verbunden werden. Es ist jedoch auch möglich, dass die elektrischen Leiter der zu verbindenden elektrischen Leitungen bereits vor dem Einlegen der Leitungen in die Aufnahmen miteinander verbunden sind. Wenn alle der zu verbindenden elektrischen Leitungen in der gewünschten Lage in den Aufnahmen der Halteelemente des Leitungsverbinders positioniert sind, und ggf. die Aufnahmen in Bezug aufeinander in einer gewünschten Lage positioniert sind, wird die erste elektrisch leitende Umhüllung an den Halteelementen positioniert und mit Klemmelementen an dem oder den Anschlussbereichen fixiert. Die Klemmelemente üben dabei auf die erste elektrisch leitende Umhüllung zumindest im Bereich der Halteelemente eine Kraft aus, die die erste elektrisch leitende Umhüllung gegen die frei liegenden elektrisch leitenden Elemente der die in den Aufnahmen der Halteelemente aufgenommenen elektrischen Leitungen drückt und dadurch den elektrischen Kontakt sicherstellt.

Wenn die erste elektrisch leitende Umhüllung eine gewünschte mechanische Stabilität des Leitungsverbinders mitbringt genügt es, wenn die Klemmelemente nur im Bereich der Halteelemente eine Kraft ausüben. Es ist jedoch auch möglich, dass die Klemmelemente miteinander verbunden sind und die gewünschte mechanische Stabilität des Leitungsverbinders über diese Verbindung erzielt wird.

Der erfindungsgemäße Leitungsverbinder kann beispielsweise in Elektrofahrzeugen oder Hybrid Fahrzeugen verwendet werden, wo die kompaktere Bauweise eine einfachere Verlegung der zu einem Kabelbaum zusammengefassten Leitungen ermöglichen kann. Die Verwendung ist nicht auf Fahrzeuge beschränkt; die Vorteile des vereinfachten Aufbaus mit weniger Bauteilen als konventionelle Lösungen und des weniger Arbeitsschritte umfassenden Handlings können überall dort genutzt werden, wo elektrische Leitungen verbunden werden müssen. Eine weitere Kostenreduzierung ist durch die Möglichkeit gegeben, die erste elektrisch Umhüllung - in der Regel ein Schirmblech - einfacher auszuführen als bei konventionellen Lösungen. Insbesondere ist hierbei keine zur Aufnahme von Leitungen besonders angepasste Formgebung des Schirmblechs erforderlich.

### Kurze Beschreibung der Zeichnung

Nachfolgend werden exemplarische Ausführungsformen der Erfindung unter Bezugnahme auf die begleitenden Figuren exemplarisch näher erläutert. Alle Figuren sind rein schematisch und nicht maßstäblich. Es zeigen:
- Fig. 1: mehrere Ansichten einer exemplarischen Ausführung eines bekannten Leitungsverbinders für acht Leitungen,
- Fig. 2: eine Ansicht einer ersten exemplarischen Ausführungsform eines erfindungsgemäßen Leitungsverbinders,
- Fig. 3: eine Schnittansicht der ersten exemplarischen Ausführungsform des Leitungsverbinders aus Figur 2,
- Fig. 4: ein Detail von Aufnahme und Kontaktierung einer Leitung in dem erfindungsgemäßen Leitungsverbinder aus Figuren 1 und 2,
- Fig. 5: eine Draufsicht auf ein exemplarisches Halteelement des erfindungsgemäßen Leitungsverbinders mit darin aufgenommenen Leitungen, erster elektrisch leitender Umhüllung und Klemmelement,
- Fig. 6: eine vereinfachte perspektivische Explosionsdarstellung von Halteelementen und erster elektrisch leitender Umhüllung einer zweiten exemplarischen Ausführungsform eines erfindungsgemäßen Leitungsverbinders,
- Fig. 7: eine vereinfachte perspektivische Explosionsdarstellung von Halteelementen und erste elektrisch leitende Umhüllung einer dritten exemplarischen Ausführungsform eines erfindungsgemäßen Leitungsverbinders,
- Fig. 8: eine vereinfachte perspektivische Explosionsdarstellung von Halteelementen und erste elektrisch leitende Umhüllung einer vierten exemplarischen Ausführungsform eines erfindungsgemäßen Leitungsverbinders,
- Fig. 9: eine schematische Darstellung einer weiteren exemplarischen Ausführungsform des erfindungsgemäßen Leitungsverbinders, und
- Fig. 10: ein Verfahrensschritte eines exemplarischen Verfahrens zum Verbinden von elektrischen Leitungen mit einem erfindungsgemäßen Leitungsverbinder.

Gleiche oder ähnliche Elemente sind in den Figuren mit gleichen oder ähnlichen Bezugszeichen versehen.

### Detaillierte Beschreibung von Ausführungsbeispielen

Figur 1 wurde in der Beschreibung des Standes der Technik bereits ausführlich erläutert und wird deshalb an dieser Stelle nicht erneut beschrieben.

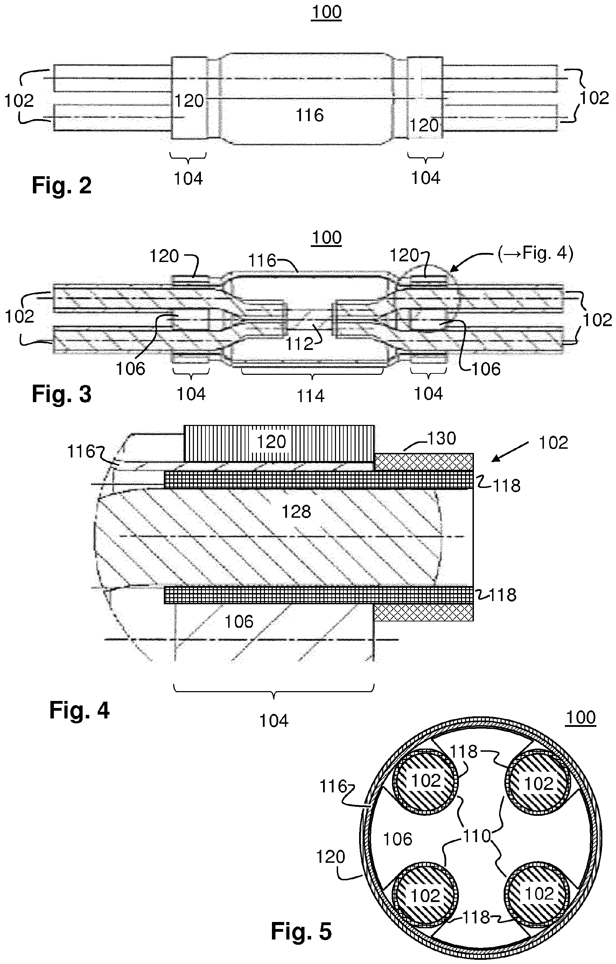

Figur 2 zeigt eine Ansicht einer ersten exemplarischen Ausführungsform eines erfindungsgemäßen Leitungsverbinders 100. Der Leitungsverbinder 100 ist von allgemein zylindrischer Form, was in dieser Ansicht jedoch nicht erkennbar ist. Elektrische Leitungen 102 sind von links und von rechts in den Leitungsverbinder hineingeführt. Das Innere des Leitungsverbinders ist von der ersten elektrisch leitenden Umhüllung 116 vollständig umschlossen. Die erste elektrisch leitende Umhüllung 116 ist zweiteilig ausgeführt, in diesem Beispiel umfasst die erste elektrische Umhüllung 116 zwei Halbschalen. An den Anschlussbereichen 104 ist die erste elektrische Umhüllung 116 von zwei Klemmelementen 120 umschlossen. Die Klemmelemente 120 sind in diesem Beispiel Crimpringe, die plastisch so verformt sind, dass radial wirkende Kräfte die in der Figur nicht sichtbaren Halteelemente 106, die darin aufgenommenen Leitungen 102 und die erste elektrisch leitende Umhüllung 116 fest miteinander verbinden.

Figur 3 zeigt einen Längsschnitt der ersten exemplarischen Ausführungsform des Leitungsverbinders 100 aus Figur 2. In der Schnittansicht sind die in den von der ersten elektrischen Umhüllung 116 gebildeten Leitungsverbinder 100 hineingeführten Leitungen 102 sowie die Verbindung der elektrischen Leiter 112 im Inneren des Leitungsverbinders 100 zu erkennen. Ebenfalls erkennbar sind die in den Anschlussbereichen 104 angeordneten Halteelemente 106 und die Klemmelemente 120. Die Kontaktierung des Schirms einer Leitung 102 durch die erste elektrisch leitende Umhüllung ist in der nachfolgend mit Bezug auf Figur 4 beschriebenen, vergrößerten Detailansicht erkennbar.

Figur 4 zeigt eine vergrößerte Detailansicht der Lage einer Leitung 102 in dem Halteelement 106 sowie die Lage der ersten elektrischen Umhüllung 116 und des Klemmelements 120 zueinander. Die von dem im Anschlussbereich 104 freigelegten elektrischen Schirm 118 und der äußeren Isolierung 130 umhüllte Leitung 102 mit dem in der Figur nicht dargestellten, von einer inneren Isolierung 128 umgebenen elektrischen Leiter ist in einer Aufnahme des Halteelements 106 aufgenommen. Schirm 118 steht in elektrischem Kontakt mit der ersten elektrischen Umhüllung 116. Klemmelement 120 liegt außen an der ersten elektrischen Umhüllung 116 an und presst diese gegen Schirm 118 und Halteelement 106.

Figur 5 zeigt eine Draufsicht auf ein exemplarisches Halteelement 106 des erfindungsgemäßen Leitungsverbinders 100 mit vier Aufnahmen 110 und darin aufgenommenen Leitungen 102, erster elektrisch leitender Umhüllung 116 und Klemmelement 120. Von den Leitungen 102 ist nur Schirm 118 gesondert dargestellt, äußere und innere Isolierung sowie die Leiter der Leitungen sind nicht in der Figur gezeigt. Schirme 118 der Leitungen 102 liegen an der ersten elektrisch leitenden Umhüllung 116 an und stehen mit dieser in elektrischem Kontakt. Klemmelement 120 ist plastisch so verformt, dass eine radiale Kraft die erste elektrisch leitende Umhüllung 116 gegen Halteelemente 106 und die freigelegten Schirm 118 der Leitungen 102 drückt. Die erste elektrisch leitende Umhüllung kann wie auch in den anderen Figuren zwei- oder mehrteilig ausgeführt sein (in der Figur nicht dargestellt).

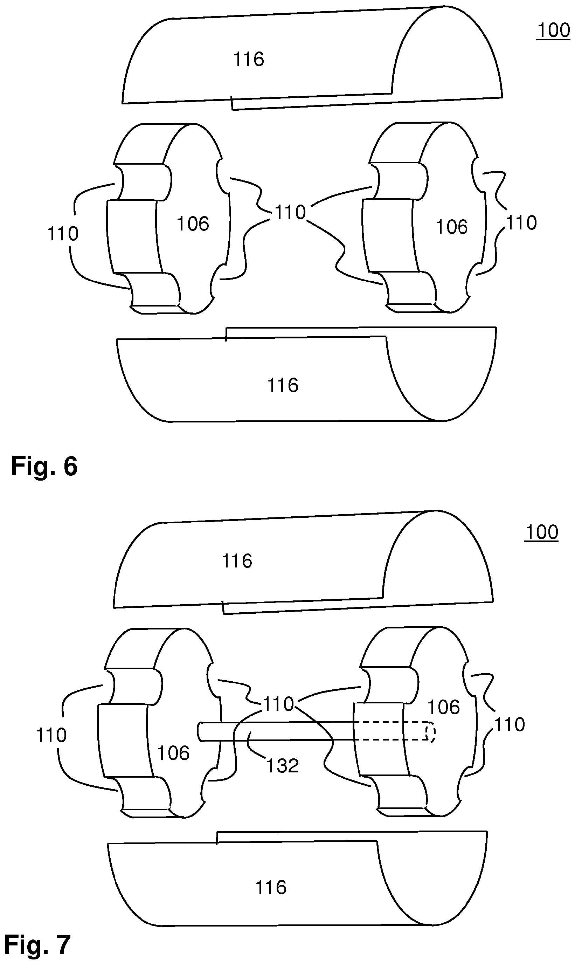

Figur 6 zeigt eine vereinfachte perspektivische Explosionsdarstellung von Halteelementen 106 und erster elektrisch leitender Umhüllung 116 einer zweiten exemplarischen Ausführungsform eines erfindungsgemäßen Leitungsverbinders 100. Halteelemente 106 weisen vier Aufnahmen 110 auf, in welche in der Figur nicht dargestellte Leitungen 102 eingelegt werden können. Die in der Figur ebenfalls nicht dargestellten Leiter der Leitungen 102 können dabei bereits miteinander verbunden sein. In diesem Fall ist es möglich, die Halteelemente 106 von außen kommend zwischen den Leitungen zu positionieren, die freigelegten elektrisch leitenden Elemente der Leitungen in den Aufnahmen 110 zu platzieren, und dann den Abstand zwischen den Halteelementen 106 so einzustellen, dass diese bündig mit Außenkanten der ersten elektrisch leitenden Umhüllung 116 abschließen, zumindest aber teilweise von diesen umschlossen sind. Nachdem alle Komponenten des Leitungsbündels 100 in eine gewünschte Lage zueinander gebracht worden sind können die beiden Hälften der ersten elektrisch leitenden Umhüllung 116 mittels in der Figur nicht dargestellter Klemmelemente 120 gegeneinander, gegen die Halteelemente 106 und gegen die in der Figur ebenfalls nicht dargestellten Leitungen gedrückt werden.

Figur 7 zeigt eine vereinfachte perspektivische Explosionsdarstellung von Halteelementen 106 und erster elektrisch leitender Umhüllung 116 einer dritten exemplarischen Ausführungsform eines erfindungsgemäßen Leitungsverbinders 100. Die dritte exemplarische Ausführungsform des erfindungsgemäßen Leitungsverbinders 100 unterscheidet sich nur geringfügig von der in Figur 6 gezeigten Ausführungsform, nämlich durch den Steg 132, der die beiden Halteelemente 106 miteinander verbindet. Durch den Steg 132 ist der Abstand der beiden Halteelemente 106 zueinander so festgelegt, dass diese bündig mit Außenkanten der ersten elektrisch leitenden Umhüllung 116 abschließen, zumindest teilweise von diesen umschlossen sind. Steg 132 ist vorzugsweise nicht im Zentrum der Halteelemente 106 angeordnet, um den für die Verbindung der Leiter benötigten Raum nicht einzuschränken.

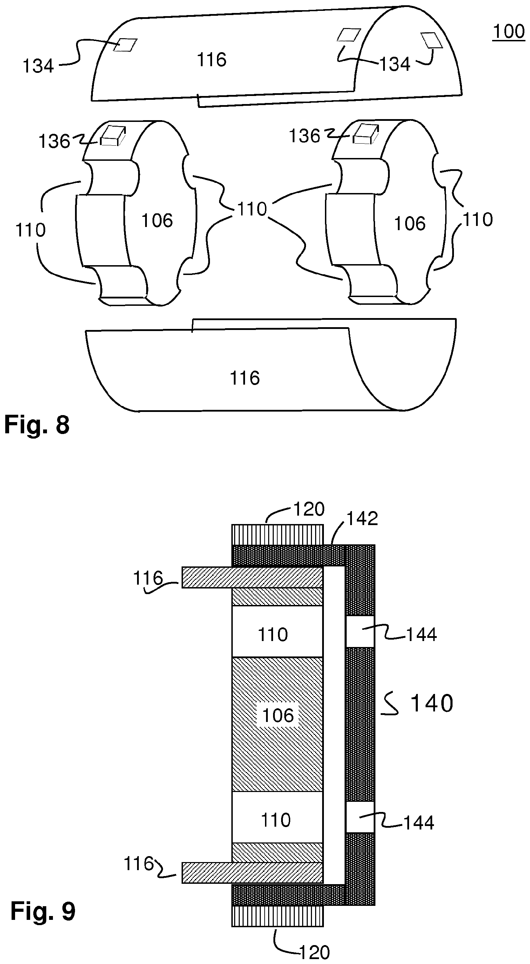

Figur 8 zeigt eine vereinfachte perspektivische Explosionsdarstellung von Halteelementen 106 und erster elektrisch leitender Umhüllung 116 einer vierten exemplarischen Ausführungsform eines erfindungsgemäßen Leitungsverbinders 100. Die vierte exemplarische Ausführungsform des erfindungsgemäßen Leitungsverbinders 100 unterscheidet sich nur geringfügig von der in Figur 6 gezeigten Ausführungsform, nämlich durch Vorsprünge 136 am Umfang der Halteelemente 106, die in entsprechende Öffnungen 134 in der ersten elektrisch leitenden Umhüllung eingreifen. Hierdurch ist trotz nicht miteinander verbundener Halteelemente 106 eine exakte Positionierung der Halteelemente in Bezug auf die erste elektrische Umhüllung 116 auf einfache Weise möglich. Anstelle der Vorsprünge 136 an den Halteelementen 106, welche in die Öffnungen 134 eingreifen ist es alternativ möglich, entsprechende nach innen weisende Vorsprünge oder Kanten an der ersten elektrischen Umhüllung 116 vorzusehen, welche in dazu passenden angeordnete Vertiefungen am Umfang der Halteelemente 106 eingreifen (nicht in der Figur gezeigt). Der besseren Übersichtlichkeit halber sind die Vorsprünge 136 und die Öffnungen 134 nur an dem oberen Teil der ersten elektrisch leitenden Umhüllung dargestellt. Die entsprechenden Vorsprünge und Öffnungen können selbstverständlich auch nur an dem unteren oder sowohl an dem unteren als auch an dem oberen Teil vorgesehen sein.

Figur 9 zeigt eine schematische Schnittdarstellung einer weiteren exemplarischen Ausführungsform des erfindungsgemäßen Leitungsverbinders 100 mit einem zusätzlichen Dichtelement 140. die erste elektrisch leitende Umhüllung 116 ist bereits um Halteelement 106 mit den Aufnahmen 110 gelegt und steht in elektrischem Kontakt mit den in der Figur nicht dargestellten freigelegten elektrisch leitenden Elementen der ebenfalls in der Figur nicht dargestellten Leitungen 102. Die Leitungen 102 sind durch Durchführungen 144 in dem Dichtelement 140 geführt, welche passend zu den Aufnahmen 110 des Halteelements 106 ausgerichtet sind. Durchführungen 144 weisen einen gegenüber dem Außendurchmesser der Leitungen 102 kleineren Durchmesser auf, sodass das elastische Material des Dichtelements 140 elastisch an der Außenseite der Leitungen anliegt. Ein Kragen 142 des Dichtelements 140 ist zwischen Klemmelement 120 und der ersten elektrisch leitenden Umhüllung 116 positioniert, wo er durch die von dem Klemmelement 120 ausgeübte, radial nach innen wirkende Kraft dichtend in Position gehalten wird. Der Kragen 142 kann aus demselben elastischen Material wie der Rest des Dichtelements bestehen. In diesem Fall kann sich der Kragen in dem Bereich unter dem Klemmelement gegebenenfalls verformen. Es ist aber auch möglich, den Kragen 142 aus einem weniger oder nicht elastischen Material zu fertigen, sodass die von den Klemmelement 120 erzeugte, nach innen wirkende Kraft keine oder nur eine geringe Verformung des Kragens bewirkt.

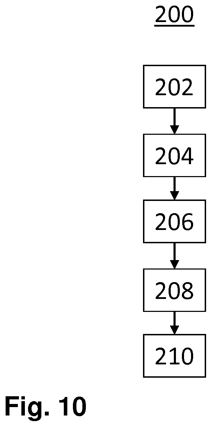

Figur 10 zeigt Verfahrensschritte eines exemplarischen Verfahrens 200 zum Verbinden elektrischer Leitungen mit einem erfindungsgemäßen Leitungsverbinder 100. In Schritt 202 werden zu verbindende elektrisch leitende Elemente, beispielsweise Schirm 118 und/oder elektrischer Leiter 112, der elektrischen Leitungen 102 freigelegt. In Schritt 204 werden die freigelegten elektrisch leitenden Elemente der elektrischen Leitungen in Aufnahmen 110 der Halteelemente 106 des Leitungsverbinders 100 positioniert. Im nachfolgenden Schritt 206 werden die Halteelemente 106 zueinander positioniert, sofern sie nicht über entsprechende Mittel miteinander starr verbunden sind. Alternativ oder zusätzlich werden die Halteelemente in Bezug auf die erste elektrisch leitende Umhüllung 116 positioniert. Im anschließenden Schritt 208 werden zueinander positionierte Halteelemente 106 mit den darin positionierten Leitungen 102 mit der ersten elektrisch leitenden Umhüllung 116 umhüllt. Schließlich werden in Schritt 210 Klemmelemente 120 angebracht, welche auf die erste elektrisch leitende Umhüllung 116 zumindest im Bereich der Halteelemente 106 eine Kraft ausüben, welche die erste elektrisch leitende Umhüllung gegen die elektrisch leitenden Elemente der in den Aufnahmen der Halteelemente aufgenommenen elektrischen Leitungen drückt. Das Anbringen der Klemmelemente 120 kann beispielsweise einen Crimp-Prozess umfassen mittels dessen das oder die Klemmelemente plastisch verformt werden. Das Anbringen der Klemmelemente kann aber auch das Auseinanderdrücken oder Aufspreizen eines eine radial nach innen wirkende Federkraft ausübenden Klemmelements umfassen.

In den Figuren sind Ausführungsbeispiele mit Haltelemente 106 gezeigt, die vier Aufnahmen 110 aufweisen. Bei anderen Ausführungsbeispielen weisen die Haltelemente 106 mehr als vier oder weniger als vier Aufnahmen auf.

### Bezugszeichenliste

- 100: Leitungsverbinder
- 102: elektrische Leitung
- 104: Anschlussbereich
- 106: Halteelement
- 108: Rand
- 110: Aufnahme
- 112: elektrischer Leiter
- 114: Verbindungsbereich
- 116: erste elektr. leitende Umhüllung
- 118: Schirm
- 120: Klemmelement
- 122: Untercrimphülse
- 124: Crimphülse
- 126: schalenförmiger Bereich
- 128: innere Isolierung
- 130: äußere Isolierung
- 132: Steg
- 134: Öffnung
- 136: Vorsprung
- 140: Dichtelement
- 142: Kragen
- 144: Durchführung

## Patentansprüche

1. Leitungsverbinder (100) für elektrische Leitungen (102) mit
- an Anschlussbereichen (104) des Leitungsverbinders (100) angeordneten Halteelementen (106), über welche die elektrischen Leitungen (102) in den Leitungsverbinder (100) hineinführbar sind, wobei jedes Halteelement (106) an einem umlaufenden Rand (108) eine oder mehrere als Vertiefungen ausgestaltete Aufnahmen (110) für Leitungen (102) aufweist, wobei die Leiter (112) der in den Leitungsverbinder hineingeführten Leitungen (102) in einem zwischen den Anschlussbereichen (104) liegenden Verbindungsbereich (114) elektrisch verbindbar sind,
- einer ersten elektrisch leitenden Umhüllung (116), die die Halteelemente (106) und den dazwischen liegenden Verbindungsbereich (114) umhüllt, und die zumindest im Bereich der Halteelemente (106) mit einem elektrisch leitenden Element (118) der elektrischen Leitungen (102) in elektrisch leitendem Kontakt steht, und
- einem oder mehreren Klemmelementen (120), welche auf die erste elektrisch leitende Umhüllung (116) zumindest im Bereich der Halteelemente (106) eine Kraft ausüben, die die erste elektrisch leitende Umhüllung (116) gegen die elektrisch leitenden Elemente (118) der in den Aufnahmen (110) der Halteelemente (106) aufgenommenen elektrischen Leitungen (102) drückt.

2. Leitungsverbinder (100) nach Anspruch 1, wobei die Klemmelemente (120) eine durch äußere Krafteinwirkung plastisch verformbare zweite Umhüllung umfassen, welche die erste elektrisch leitende Umhüllung (116) zumindest an den Anschlussbereichen (104) umhüllt, und die nach einer entsprechenden plastischen Verformung zumindest im Bereich der Halteelemente (106) die Kraft ausübt, die die erste elektrisch leitende Umhüllung (116) gegen die elektrisch leitenden Elemente (118) der in den Halteelementen (106) aufgenommenen elektrischen Leitungen (102) drückt.

3. Leitungsverbinder (100) nach Anspruch 1, wobei die Klemmelemente (120) feder- oder gummielastische Elemente umfassen, welche die erste elektrisch leitende Umhüllung (116) an oder zwischen den Anschlussbereichen (104) umgreifen oder umschließen, und die zumindest im Bereich der Halteelemente (106) die Kraft ausüben, die die erste elektrisch leitende Umhüllung (116) gegen die elektrisch leitenden Elemente (118) der in die Halteelementen (106) aufgenommenen elektrischen Leitungen (102) drückt.

4. Leitungsverbinder (100) nach einem der vorhergehenden Ansprüche, wobei die Klemmelemente (120) die Halteelemente (106), die darin aufgenommenen elektrischen Leitungen (102) und die erste elektrisch leitende Umhüllung (116) kraftschlüssig verbinden.

5. Leitungsverbinder (100) nach einem oder mehreren der vorhergehenden Ansprüche, wobei die Klemmelemente (120) und/oder die Halteelemente (106) aus einem elektrisch leitenden Material bestehen.

6. Leitungsverbinder (100) nach einem oder mehreren der vorhergehenden Ansprüche, wobei die erste elektrisch leitende Umhüllung (116) an den Anschlussbereichen (104) in Richtung der Leitungen (102) zeigende, mit den Aufnahmen (110) korrespondierende Vorsprünge aufweist, die eine äußere Isolierung (130) einer in der Aufnahme (110) positionierten Leitung (102) durchdringen und einen elektrischen Kontakt mit einem darunterliegenden Schirm (118) oder Leiter (102) herstellen.

7. Leitungsverbinder (100) nach einem oder mehreren der vorhergehenden Ansprüche, wobei die erste elektrisch leitende Umhüllung (116) mehrteilig ist, und wobei die einzelnen Teile miteinander in elektrischem Kontakt stehen.

8. Leitungsverbinder (100) nach einem oder mehreren der vorhergehenden Ansprüche, wobei an mindestens einem Anschlussbereich (104) ein gummielastisches Dichtelement (140) vorgesehen ist, durch das die Leitungen (102) nach Art einer Übermaßpassung hindurchgeführt sind, wobei ein Kragen (142) des Dichtelements (140) zwischen der ersten elektrisch leitenden Umhüllung (116) und einem Klemmelement (120) angeordnet und fixiert ist.

9. Leitungsverbinder (100) nach einem oder mehreren der vorhergehenden Ansprüche, wobei ein innerhalb der ersten elektrisch leitenden Umhüllung (116) liegende Raum mit einem elektrisch nichtleitenden Fluid gefüllt ist.

10. Verfahren (200) zum Verbinden elektrischer Leitungen mit einem Leitungsverbinder (100) nach einem oder mehreren der vorhergehenden Ansprüche, umfassend:
- Freilegen (202) zu verbindender elektrisch leitender Elemente (118) der elektrischen Leitungen (102),
- Positionieren (204) der freigelegten elektrisch leitenden Elemente (118) der elektrischen Leitungen (102) in Aufnahmen (110) der Halteelemente (106),
- Positionieren (206) der Halteelemente (106) zueinander und/oder in Bezug auf die erste elektrisch leitende Umhüllung (116),
- Umhüllen (208) der zueinander positionierten Halteelemente (106) mit den darin positionierten Leitungen (102) mit der ersten elektrisch leitenden Umhüllung (116), und
- Anbringen (210) von Klemmelementen (120), welche auf die erste elektrisch leitende Umhüllung (116) zumindest im Bereich der Halteelemente (106) eine Kraft ausüben, die die erste elektrisch leitende Umhüllung (116) gegen die elektrisch leitenden Elemente (118) der in den Aufnahmen (110) der Halteelemente (106) aufgenommenen elektrischen Leitungen (102) drückt.

11. Elektro- oder Hybridfahrzeug mit einem Leitungsverbinder (100) nach einem oder mehreren der Ansprüche 1 bis 9.

## Claims

1. A line connector (100) for electrical lines (102) having
- holding elements (106) arranged in connection regions (104) of the line connector (100), by means of which the electrical lines (102) can be introduced into the line connector (100), wherein each holding element (106) has one or more receptacles (110) shaped as recesses for lines (102) on a circumferential edge (108), wherein the conductors (112) of the lines (102) introduced into the line connector can be electrically connected in a connection region (114) located between the connection regions (104),
- a first electrically conductive enclosure (116), which encloses the holding elements (106) and the connection region (114) located therebetween, and which is in electrically conductive contact at least in the region of the holding elements (106) with an electrically conductive element (118) of the electrical lines (102), and
- one or more clamping elements (120), which exert a force on the first electrically conductive enclosure (116) at least in the region of the holding element (106), which force presses the first electrically conductive enclosure (116) against the electrically conductive elements (118) of the electrical lines (102) received in the receptacles (110) of the holding elements (106).

2. The line connector (100) according to claim 1, wherein the clamping elements (120) comprise a second enclosure plastically deformable by external application of force, which encloses the first electrically conductive enclosure (116) at least in the connection regions (104), and which exerts the force after a corresponding plastic deformation at least in the region of the holding elements (106), which presses the first electrically conductive enclosure (116) against the electrically conductive elements (118) of the electrical lines (102) received in the holding elements (106).

3. The line connector (100) according to claim 1, wherein the clamping elements (120) comprise spring- or rubber-elastic elements, which engage around or surround the first electrically conductive enclosure (116) in or between the connection regions (104), and which exert the force at least in the region of the holding elements (106), which presses the first electrically conductive enclosure (116) against the electrically conductive elements (118) of the electrical lines (102) received in the holding elements (106).

4. The line connector (100) according to any one of the preceding claims, wherein the clamping elements (120) non-positively connect the holding elements (106), the electrical lines (102) received therein and the first electrically conductive enclosure (116).

5. The line connector (100) according to any one or a plurality of the preceding claims, wherein the clamping elements (120) and/or the holding elements (106) consist of an electrically conductive material.

6. The line connector (100) according to any one or a plurality of the preceding claims, wherein the first electrically conductive enclosure (116) in the connection regions (104) pointing in the direction of the lines (102), has projections corresponding to the receptacles (110), which penetrate an outer insulation (130) of the line (102) positioned in the receptacle (110) and produce an electrical contact with an underlying shield (118) or conductor (102).

7. The line connector (100) according to any one or a plurality of the preceding claims, wherein the first electrically conductive enclosure (116) consists of several parts, and wherein the individual parts are in electrical contact with one another.

8. The line connector (100) according to any one or a plurality of the preceding claims, wherein a rubber-elastic sealing element (140) is provided at least in one connection region (104), through which the lines (102) are fed in the manner of an interference fit, wherein a collar (142) of the sealing element (140) is arranged and fixed between the first electrically conductive enclosure (116) and the clamping element (120).

9. The line connector (100) according to any one or a plurality of the preceding claims, wherein a space located within the first electrically conductive enclosure (116) is filled with an electrically non-conductive fluid.

10. A method (200) for connecting electrical lines with a line connector (100) according to any one or a plurality of the preceding claims, comprising:
- Exposing (202) electrically conductive elements (118) of the electrical lines (102), which electrically conductive elements are to be connected,
- positioning (204) the exposed electrically conductive elements (118) of the electrical lines (102) in receptacles (110) of the holding elements (106),
- positioning (206) the holding elements (106) relative to one another and/or in relation to the first electrically conductive enclosure (116),
- enclosing (208) the holding elements (106) positioned relative to one another with the lines (102) positioned therein with the first electrically conductive enclosure (116), and
- attaching (210) clamping elements (120), which exert a force on the first electrically conductive enclosure (116) at least in the region of the holding elements (106), which force presses the first electrically conductive enclosure (116) against the electrically conductive elements (118) of the electrical lines (102) received in the receptacle (110) of the holding elements (106).

11. An electric or hybrid vehicle with a line connector (100) according to any one or a plurality of claims 1 to 9.

## Revendications

1. Connecteur (100) pour lignes électriques (102) avec
- des éléments de maintien (106) disposés au niveau de zones de raccordement (104) du connecteur (100), par l'intermédiaire desquels les lignes électriques (102) peuvent être introduites dans le connecteur (100), dans lequel chaque élément de maintien (106) comprend, sur un bord circonférentiel (108), un ou plusieurs logements (110), conçus comme des cavités, pour des lignes (102), dans lequel les conducteurs (112) des lignes (102) introduites dans le connecteur peuvent être reliés électriquement dans une zone de liaison (114) se trouvant entre les zones de raccordement (104),
- une première enveloppe électro-conductrice (116), qui entoure les éléments de maintien (106) et la zone de liaison (114) se trouvant entre eux, et qui est en contact électro-conducteur, au moins au niveau des éléments de maintien (106), avec un élément électro-conducteur (118) des lignes électriques (102) et
- un ou plusieurs éléments de serrage (120), qui exercent une force sur la première enveloppe électro-conductrice (116), au moins au niveau des éléments de maintien (106), qui comprime la première enveloppe électro-conductrice (116) contre les éléments électro-conducteurs (118) des lignes électriques (102) logées dans les logements (110) des éléments de maintien (106).

2. Connecteur (100) selon la revendication 1, dans lequel les éléments de serrage (120) comprennent une deuxième enveloppe déformable plastiquement par une force extérieure, qui entoure la première enveloppe électro-conductrice (116) au moins au niveau des zones de raccordement (104) et qui, après une déformation plastique correspondante, exerce, au moins au niveau des éléments de maintien (106), la force qui comprime la première enveloppe électro-conductrice (116) contre les éléments électro-conducteurs (118) des lignes électriques (102) logées dans les éléments de maintien (106).

3. Connecteur (100) selon la revendication 1, dans lequel les éléments de serrage (120) comprennent des éléments élastiques à ressorts ou en caoutchouc, qui entourent la première enveloppe électro-conductrice (116) au niveau ou entre les zones de raccordement (104) et qui exercent, au moins au niveau des éléments de maintien (106), la force qui comprime la première enveloppe électro-conductrice (116) contre les éléments électro-conducteurs (118) des lignes électriques (102) logées dans les éléments de maintien (106).

4. Connecteur (100) selon l'une des revendications précédentes, dans lequel les éléments de serrage (120) relient les éléments de maintien (106), les lignes électriques (102) qui y sont logées et la première enveloppe électro-conductrice (116) par force.

5. Connecteur (100) selon l'une ou plusieurs des revendications précédentes, dans lequel les éléments de serrage (120) et/ou les éléments de maintien (106) sont constitués d'un matériau électro-conducteur.

6. Connecteur (100) selon l'une ou plusieurs des revendications précédentes, dans lequel la première enveloppe électro-conductrice (116) comprend, au niveau des zones de raccordement (104), des saillies correspondant aux logements (110), pointant dans la direction des lignes (102), qui traversent une isolation externe (130) d'une ligne positionnée dans le logement (110) et qui établissent un contact électrique avec un blindage (118) ou un conducteur (102) situé en dessous.

7. Connecteur (100) selon l'une ou plusieurs des revendications précédentes, dans lequel la première enveloppe électro-conductrice (116) est en plusieurs parties et dans lequel les différentes parties sont en contact électrique les unes avec les autres.

8. Connecteur (100) selon l'une ou plusieurs des revendications précédentes, dans lequel, au niveau d'au moins une zone de raccordement (104), est prévu un élément d'étanchéité élastique en caoutchouc (140), à travers lequel les lignes (102) sont guidées selon un ajustement avec serrage, dans lequel un col (142) de l'élément d'étanchéité (140) est disposé et fixé entre la première enveloppe électro-conductrice (116) et un élément de serrage (120).

9. Connecteur (100) selon l'une ou plusieurs des revendications précédentes, dans lequel un espace se trouvant à l'intérieur de la première enveloppe électro-conductrice (116) est rempli d'un fluide non électro-conducteur.

10. Procédé (200) de raccordement de lignes électriques avec un connecteur (100) selon l'une ou plusieurs des revendications précédentes, comprenant :
- le détachement (202) des lignes électriques (102) en éléments électro-conducteurs (118) à raccorder,
- le positionnement (204) des éléments électro-conducteurs (118) détachés des lignes électriques (102) dans des logements (110) des éléments de maintien (106),
- le positionnement (206) des éléments de maintien (106) les uns par rapport aux autres et/ou par rapport à la première enveloppe électro-conductrice (116),
- l'enveloppement (208) des éléments de maintien (106) positionnés les uns par rapport aux autres, avec les lignes (102) positionnées à l'intérieur, avec la première enveloppe électro-conductrice (116), et
- la pose (210) d'éléments de serrage (120), qui exercent, sur la première enveloppe électro-conductrice (116), au moins au niveau des éléments de maintien (106), une force qui comprime la première enveloppe électro-conductrice (116) contre les éléments électro-conducteurs (118) des lignes électriques (102) logées dans les logements (110) des éléments de maintien (106).

11. Véhicule électrique ou hybride avec un connecteur (100) selon l'une ou plusieurs des revendications 1 à 9.
